# EUROPÄISCHE PATENTSCHRIFT

(11) **EP 3 887 797 B1**
(45) Veröffentlichungstag und Bekanntmachung des Hinweises auf die Patenterteilung: **03.05.2023**
(21) Anmeldenummer: 19809832.9
(22) Anmeldetag: 27.11.2019
(51) Int. Cl.: G01N 19/04, B23P 6/04, B29C 70/30, B29C 65/48

(54) **VERFAHREN ZUR HERSTELLUNG EINES PRÜFKÖRPERS**
METHOD FOR PRODUCING A TEST SPECIMEN
PROCÉDÉ DE PRODUCTION D'UN CORPS D'ESSAI

(30) Priorität: 29.11.2018 DE 102018130330
(43) Veröffentlichungstag der Anmeldung: 06.10.2021
(73) Patentinhaber: Deutsches Zentrum für Luft- und Raumfahrt e.V., 51147 Köln (DE)
(72) Erfinder: HEILMANN, Lennert, 28201 Bremen (DE)
(74) Vertreter: Gramm, Lins & Partner Patent- und Rechtsanwälte PartGmbB
(86) Internationale Anmeldenummer: PCT/EP2019/082761
(87) Internationale Veröffentlichungsnummer: WO 2020/109395

(56) Entgegenhaltungen:
- WO-A1-2018/199032
- WO-A1-2019/215294
- DE-A1-102010 011 750
- Conference Paper ET AL: "Proofed Bonding -A Novel Method for Verifying Adhesion in Adhesively Bonded Composite Repairs PROOFED BONDING - A NOVEL METHOD FOR VERIFYING ADHESION IN ADHESIVELY BONDED COMPOSITE REPAIRS", ECCM18 -18 th European Conference on Composite Materials Athens, Greece, 28. Juni 2018 (2018-06-28), Seiten 24-28, XP055666851, Gefunden im Internet: URL:https://www.researchgate.net/publicati on/326112967_Proofed_Bonding_-_A_Novel_Met hod_for_Verifying_Adhesion_in_Adhesively_B onded_Composite_Repairs [gefunden am 2020-02-10] in der Anmeldung erwähnt

## Beschreibung

Die Erfindung betrifft ein Verfahren zur Herstellung eines Prüfkörpers für eine mechanisch-zerstörende Prüfung einer stoffschlüssigen Fügeverbindung.

Das stoffschlüssige Fügen mittels Klebstoff bzw. Klebwerkstoffen stellt höchste Anforderungen an die zu verarbeitenden Materialien und die Verarbeitungsprozesse. Denn da es sich beim Kleben um einen speziellen Prozess handelt, kann die Qualität einer gefertigten Fügeverbindung nicht vollständig durch nicht-zerstörende Verfahren nachgewiesen werden. Gängige Praxis ist es daher, einen zulässigen Parameterraum des Verarbeitungsprozesses zur Herstellung der stoffschlüssigen Fügeverbindung mittels generischer Prüfkörper zu ermitteln und den Fertigungsprozess dann durch Einhaltung dieser Parameter abzusichern. In der Prozessqualifikation werden für jede Kombination aus Materialien und Verarbeitungsparametern entsprechend Prüfkörper hergestellt und zerstörend mechanisch geprüft, um die Zulässigkeit des jeweiligen Parametersatzes nachzuweisen. Dies erfordert sehr umfangreiche Prüfprogramme, wobei aufgrund des Prüfaufwandes teils immense Kosten anfallen können.

Eine besondere Fragestellung solcher Prüfungen betrifft die Qualität der Anhaftung (Adhäsion) des Klebstoffes an die Fügepartner. Die zum Nachweis der Adhäsion existierenden Prüfkörpertypen und Prüfverfahren sind teilweise sehr aufwändig in der Herstellung, Prüfung und Auswertung. So existiert beispielsweise mit der DIN-EN 2243-2 (Rollenschälversuch Metall-Metall) eine etablierte Methode zur Adhäsionsprüfung, welche akzeptable Ergebnisse für Metallverklebungen liefert. Zunehmend werden jedoch auch artfremde Werkstoffe gefügt, bei denen beispielsweise auf Faserverbundstrukturen entsprechende Fügepartner aus unterschiedlichsten Werkstoffarten und Werkstoffgruppen stoffschlüssig gefügt werden sollen. Die aus der DIN-EN 2243-2 bekannte Methode kann dabei nicht in allen Fällen eingesetzt werden, was insbesondere für Faserverbundwerkstoffe gilt.

Aus L. Heilmann, P. Wierach, M. Wiedemann: "Proofed bonding - a novel method for verifying adhesion in adhesively bonded composite repairs", ECCM18 - 8th European Conference on Composite Materials, Athen, Griechenland 24. - 28. Juni 2018 ist ein Verfahren zur Überprüfung der Fügefläche mit Hilfe eines Abreißprüftextils sowie die Herstellung eines Probenkörpers zum Überprüfen der Adhäsion einer Fügeverbindung bekannt, bei denen das Prüftextil ein großmaschiges Quadratmaschengewebe ist. Die durch die Webart entstehenden Maschen (Öffnungen innerhalb des Gewebes, auch Poren genannt) dienen dabei als Eindringhilfe des Klebstoffes in das Gewebe, um so eine feste Verbindung des verwendeten Quadratmaschengewebes mit der Fügeoberfläche durch den Klebstoff zu bewirken. Das Quadratmaschengewebe zeichnet sich dabei durch Poren bzw. Öffnungen in einer Projektion orthogonal auf die Ebene des Quadratmaschengewebes aus. Durch Abziehen des Prüfgewebes entsteht dabei ein Bruch des Klebstoffes im Bereich der Maschen bzw. Poren und kann dabei näher untersucht werden, um die Fügefläche an sich zu überprüfen.

Die Herstellung eines Prüfkörpers mit Hilfe eines solchen Quadratmaschengewebes hat jedoch unter anderem den Nachteil, dass der Prüfkörper eine Kantenversiegelung des Gewebes bedarf, da es ansonsten zum Einreißen des Gewebes während des mechanischen Tests kommt. Durch das Einreißen des Gewebes kommt es jedoch zu Verfälschungen des Prüfergebnisses, so dass basierend auf Überprüfungen mit derartigen Prüfkörpern große Toleranzen für den Fertigungsprozess eingeplant werden müssen. Des Weiteren hat sich gezeigt, dass die Versiegelung der Kanten bei der Prüfkörperherstellung einen erheblichen Mehraufwand bedeutet und deutlich größere Substrate erfordern. Es konnte darüber hinaus empirisch ermittelt werden, dass die erforderliche Breite der Siegelkante abhängig von dem eingesetzten Gewebe und der Orientierung bzw. dem Winkel des Gewebes relativ zur Prüfrichtung sowie der Festigkeit und Schichtdicke des aufgetragenen Klebstoffes abhängt. Eine zu schmale Siegelkante führt dabei zum Einreißen des Gewebes, während eine zu breite Siegelkante zu einer Verfälschung des Mess- und Prüfergebisses führt.

Des Weiteren werden oftmals grobmaschige Gewebe mit dicken Fäden eingesetzt, da dünne und feine Gewebe zu fragil sind und bei festeren Klebungen reißen. Die Maschenfeinheit konnte jedoch empirisch als wesentlicher Faktor für die Detektion von Defekten ermittelt werden.

Aus der nachveröffentlichten DE 10 2017 113 430.1 ist des Weiteren ein Verfahren zum Überprüfen einer Fügeoberfläche eines Faserverbundbauteils bekannt, bei dem ebenfalls ein flächiges Prüftextil und eine Klebstoffgrundierung auf ein Substrat appliziert, die Klebstoffgrundierung stoffschlüssig ausgehärtet und anschließend das Prüftextil abgezogen wird, wobei dann die Fügeoberfläche durch eine qualitative Bewertung und/oder ein quantitative Bewertung überprüft wird. Auch hierbei werden Quadratmaschengewebe mit einer großen Porigkeit verwendet, um möglichst kohäsiven Bruch des Klebstoffes innerhalb der Maschen zu erreichen.

Die WO 2019/215294 A1 offenbart ein Verfahren zum Applizieren eines Werkstoffes auf ein Faserverbundbauteil. Dabei wird ein offenporiges Gewebe verwendet, um nach dem Abziehen einen Kohäsivbruch im Matrixmaterial zu erzeugen.

Aus der DE 10 2010 011 750 A1 ist ein Flächengebilde zur Reduzierung des Luftwiderstandes eines Luftfahrzeuges bekannt, wobei das Flächengebilde eine Metalldrahtanordnung oder ein Verbundgewebe aufweist.

Vor diesem Hintergrund ist es Aufgabe der vorliegenden Erfindung, ein verbessertes Verfahren zur Herstellung eines Prüfkörpers anzugeben, der sich einfach und kostengünstig herstellen lässt und darüber hinaus ein besseres und unverfälschteres Prüfergebnis bei der Überprüfung von stoffschlüssigen Fügeverbindungen mit verschiedenen Fügepartnern erreicht.

Die Aufgabe wird mit dem Verfahren gemäß Anspruch 1 erfindungsgemäß gelöst.

Gemäß Anspruch 1 wird ein Verfahren zur Herstellung eines Prüfkörpers für eine mechanisch-zerstörende Prüfung einer stoffschlüssigen Fügeverbindung vorgeschlagen, wobei zunächst ein flächiges Substrat bereitgestellt wird. Auf dieses flächige Substrat wird dann im weiteren Verfahren eine stoffschlüssige Fügeverbindung erzeugt, die mit Hilfe des Prüfkörpers überprüft werden soll.

Das flächige Substrat kann bspw. ein Faserverbundsubstrat sein, das aus einem Faserverbundwerkstoff gebildet ist, der ein Fasermaterial und ein das Fasermaterial einbettendes Matrixmaterial hat. Durch Aushärten des das Fasermaterial einbettende Matrixmaterials wird eine integrale Einheit aus Fasermaterial und Matrixmaterial gebildet. Das flächige Faserverbundsubstrat kann dabei im ausgehärteten Zustand bereitgestellt werden, so dass die stoffschlüssige Fügeverbindung auf der ausgehärteten Oberfläche des Substrates erzeugt wird. Denkbar ist aber auch, dass das flächige Faserverbundsubstrat in einem nicht ausgehärteten Zustand bereitgestellt wird, wobei im weiteren Prozessschritt dann die stoffschlüssige Fügeverbindung zusammen mit dem Matrixmaterial ausgehärtet wird.

Denkbar sind aber auch andere Substrate oder Festkörper, bspw. aus anorganischen oder organischen Materialien sowie aus Metall.

Nach dem Bereitstellen des flächigen Substrats wird mindestens ein Prüfgewebe sowie ein Klebstoff bzw. Klebwerkstoff auf die Substratoberfläche des flächigen Substrats appliziert, wobei anschließend der Klebstoff bzw. Klebwerkstoff ausgehärtet wird, um so eine stoffschlüssige Fügeverbindung zwischen dem Prüfgewebe und der Substratoberfläche durch den ausgehärteten Klebstoff zu erzeugen. Das Aushärten des Klebstoffes kann auch verschiedene Arten geschehen, bspw. durch Temperieren des Klebstoffes, durch Aushärten bei Raumtemperatur, durch UV-Strahlung, Feuchteaufnahme usw.

Erfindungsgemäß ist nun vorgesehen, dass als Prüfgewebe ein Tressengewebe und/oder ein kalandrierte Quadratmaschengewebe bereitgestellt und verwendet wird.

Als Tressengewebe im Sinne der vorliegenden Erfindung wird dabei ein Gewebe verstanden, das in der Projektion orthogonal zur Gewebeebene (bzw. Gewebeoberfläche) keine Maschen erkennen lässt (Nullmaschen) und in diesen orthogonalen Projektionen somit im Wesentlichen undurchsichtig ist. Gleichwohl weist das Tressengewebe aufgrund der Webart eine Durchlässigkeit auf, die in einer perspektivischen Projektion (beispielsweise 45 Grad) zu erkennen ist. Somit kann der applizierte Klebstoff auch in das Tressengewebe eindringen und es durchdringen, um so eine stoffschlüssige Verbindung mit dem Tressengewebe und dem flächigen Substrat herstellen zu können.

Mit Hilfe der vorliegenden Erfindung und der Verwendung eines Tressengewebes und/oder eines Quadratmaschengewebes wird es somit möglich, einen Prüfkörper herzustellen, der insbesondere in seinen Randbereichen nicht mehr einreißt, wenn der Prüfkörper bestimmungsgemäß gebraucht wird. Hierbei wird das Prüfgewebe in Form des bereitgestellten Tressengewebes und/oder Quadratmaschengewebes nach dem Aushärten des Klebstoffes von der Fügeoberfläche des flächigen Substrates abgezogen, um so beispielsweise die Adhäsionsfähigkeit auf der flächigen Substratoberfläche bestimmen zu können. Aufgrund der Tatsache, dass das Prüfgewebe des erfindungsgemäßen Prüfkörpers nunmehr nicht mehr einreißt und der Einfluss einer Siegelkante auf das Prüfergebnis eliminiert ist, wird das Prüfergebnis insgesamt nicht mehr verfälscht, wodurch sich ein genaueres Prüfergebnis insgesamt ergibt. Es hat sich außerdem gezeigt, dass die Kennwerte weniger stark streuen, so dass die untersuchten Einflüsse auf die Verklebequalität besser erkennbar werden. Außerdem lässt sich ein solcher Probenkörper sehr einfach und effizient herstellen, so dass darüber hinaus auch die Kosten stark reduziert werden können.

Bei einem Quadratmaschengewebe handelt es sich vorzugsweise um ein Gewebe aus rostfreiem Stahl, insbesondere chromhaltige Stahl, welcher bei Kontakt mit Sauerstoff eine Chrom-Oxidschicht an der Oberfläche ausbildet. Hierdurch kann insbesondere auf eine Kantenversiegelung verzichtet werden.

Die Quadratmaschengewebe sind kalandriert. Es hat sich gezeigt, dass durch die Kalandrierung der Quadratmaschengewebe die Gewebefestigkeit steigt und das andererseits mit kalandrierten Geweben unter bestimmten Voraussetzungen Fehler besser detektiert werden können als mit unkalandrierten Geweben. Die Quadratmaschengewebe können eine Leinen- und/oder Köperbindung haben. Die Porengröße des Quadratmaschengewebes kann im Bereich von 25 µm bis 1000 µm liegen, vorzugsweise jedoch in einem Bereich von 75 µm bis 300 µm.

Bei kalandrierten Quadratmaschengewebe kann eine offene Fläche (gebildet durch die Poren) von 60 % (bei Klebstoff mit geringer Festigkeit) oder weniger bzw. und 50 % (bei Klebstoff mit hochfester Klebverbindung) oder weniger liegen. Der prozentuale Anteil bezieht sich dabei auf die Gesamtfläche des Quadratmaschengewebes.

Bei kalandrierten Quadratmaschengeweben ist die Gewebedicke um mindestens 10 %, vorteilhafterweise um mindestens 30 % über dem unkalandrierten Gewebe reduziert.

Die Oberfläche des Quadratmaschengewebes kann eine Chromoxidschicht aufweisen oder eine geätzte Oberfläche zur Erhöhung der Oberflächenrauigkeit für gute Anhaftung des Klebstoffes aufweisen. Die Oberfläche kann aber auch beschichtet sein, z.B. mit einem Haftvermittler.

Das Prüfgewebe wird dabei vorzugsweise so auf dem Substrat appliziert, dass die Orientierung des Gewebes, d. h. der Faserwinkel des Gewebes hinsichtlich der späteren Schälrichtung definiert ist. Vorzugsweise wird eine Applikation des Gewebes in Richtung der Kettfäden oder der Schussfäden vorgegeben. Als Klebstoff kann des Weiteren ein Filmklebstoff appliziert werden, wobei der Zustand des Klebstoffes in seinen Abmessungen identisch ist mit den Abmessungen des Prüfgewebes

In der Regel weist das Tressengewebe und/oder Quadratmaschengewebes eine Mehrzahl von Kettfäden und eine Mehrzahl von die Kettfäden kreuzende Schussfäden auf. Gemäß einer Ausführungsform hierzu sind die Kettfäden und/oder die Schussfäden aus einem metallischen Material, insbesondere aus einem Eisenmaterial, wie beispielsweise Stahl, gebildet. Hierdurch können die beim Abziehen des Prüfgewebes auftretenden Kräfte gut abgeleitet werden. Denkbar sind aber auch andere Werkstoffe, wie beispielsweise Kunststoffe, Polymere, Titan oder ähnliches.

Gemäß einer weiteren Ausführungsform weisen die Schussfäden einen kleineren Querschnitt auf als die Kettfäden oder andersherum, wodurch sich in der Projektion orthogonal auf die Ebene des Tressengewebes keine Maschen ergeben, während in einer perspektivischen Projektion auf das Tressengewebe sich die Durchlässigkeit des Tressengewebes zeigt. Hierdurch kann Stabilität und Festigkeit in Verbindung mit Durchlässigkeit erreicht werden.

In einer weiteren Ausführungsform ist das Tressengewebe derart gewebt, dass die Kettfäden voneinander beabstandet angeordnet sind, während die Schussfäden einander angrenzend angeordnet sind und somit auf Block gewebt sind.

In einer Ausführungsform wird in einem ersten Schritt das Prüfgewebe auf das flächige Substrat appliziert, während dann in einem darauffolgenden zweiten Schritt auf das applizierte Prüfgewebe der Klebstoff aufgetragen wird. Insbesondere im Zusammenhang mit dem Temperieren des Klebstoffes zum Zwecke des Aushärtens erfolgt dann ein Eindringen des Klebstoffes in das Tressengewebe und/oder Quadratmaschengewebe, da durch das Temperieren des Klebstoffes dieser in der Regel aufschmilzt und sich verflüssigt. Durch das Eindringen des Klebstoffes in das Tressengewebe und/oder Quadratmaschengewebe wird dann nach dem Durchdringen auch die Substratoberfläche benetzt, so dass nach dem Aushärten des Klebstoffes eine stoffschlüssige Fügeverbindung entsteht. In dieser Ausführungsform wird dabei das Tressengewebe und/oder Quadratmaschengewebe auf die Fügeoberfläche appliziert, wobei dann der Klebstoff appliziert wird, so dass sich anfänglich das Tressengewebe und/oder Quadratmaschengewebe zwischen der Fügeoberfläche und dem Klebstoff befindet.

Selbstverständlich ist auch die umgekehrte Alternative denkbar, bei der zunächst der Klebstoff auf die Fügeoberfläche appliziert und dann das Tressengewebe und/oder Quadratmaschengewebe appliziert wird, wobei es sich hierbei gezeigt hat, dass die Durchdringung des Tressengewebes und/oder Quadratmaschengewebes mit dem Klebstoff unter Umständen nur unzureichend sein kann. Denkbar ist aber auch, dass das Prüfgewebe zunächst mit dem Klebstoff getränkt und dann mit dem infundierten Klebstoff appliziert wird.

Gemäß einer Ausführungsform kann der Klebstoff dabei in Form eines Filmklebstoffes bereitgestellt und aufgetragen werden, was die Handhabung bei der Herstellung des Prüfkörpers vereinfacht.

Gemäß einer Ausführungsform wird der Klebstoff auf das Prüfgewebe aufgetragen, bevor das Prüfgewebe auf dem flächigen Substrat appliziert wird.

Gemäß einer Ausführungsform wird in einem Teilbereich des flächigen Substrats zunächst eine Trennfolie appliziert, um in diesen Bereich eine stoffschlüssige Fügeverbindung mit dem Substrat zu verhindern. Die Trennfolie in dem Teilbereich dient dabei dazu, eine Abreißlasche nach dem Aushärten des Klebstoffes zu erzeugen, damit das Prüfgewebe von der Fügeoberfläche abgerissen werden kann. Die Abreißlasche kann dabei auch dazu dienen, den Prüfkörper in eine entsprechende Prüfmaschine einzuspannen und so einen automatisierten Abriss des Prüfgewebes von der Fügeoberfläche zu bewirken.

Gemäß einer weiteren Ausführungsform wird nach dem Aushärten des Klebstoffes der Prüfkörper in eine Mehrzahl von einzelnen Prüfcoupons zerteilt, indem das Prüfgewebe durchtrennt wird. Es hat sich gezeigt, dass der Prüfkörper zunächst in seiner Gesamtheit herstellbar ist und anschließend beispielsweise in einem Nass-Sägeverfahren in einzelne Prüfcoupons getrennt werden kann, indem hierbei das Prüfgewebe selber durchtrennt wird. Dies hat keinerlei negative Auswirkung auf das spätere Prüfergebnis, wobei nach dem Zerteilen des Prüfkörpers in die einzelnen Prüfcoupons die Randbereiche nicht zusätzlich durch eine Randversiegelung geschützt werden müssen. Vielmehr kann der Prüfkörper zerteilt werden, indem einfach das Prüfgewebe an den vorgegebenen Stellen durchtrennt wird, wobei dann der Prüfcoupon einsatzbereit wäre. Dabei kann auch das Substrat mit durchtrennt werden, ohne dass dies negative Auswirkungen auf das Prüfergebnis hat.

Demzufolge ist es vorteilhaft, wenn an dem Prüfgewebe, insbesondere dem Tressengewebe, keine Randversiegelung aufgebracht wird. Dies spart Zeit und Kosten.

Alternativ kann aber auch vorgesehen sein, insbesondere bei einem Quadratmaschengewebe, dass eine Randversiegelung aufgebracht wird.

In einer weiteren Ausführungsform wird nach dem Applizieren des Prüfgewebes und des Klebstoffes auf das flächige Substrat dieser so hergestellte Probenaufbau durch eine Vakuumabdeckung, beispielsweise eine Vakuumfolie abgedeckt, anschließend evakuiert und dann der Klebstoff beispielswiese durch Temperieren ausgehärtet.

In einer Ausführungsform sind zwischen der Vakuumabdeckung und dem Probenaufbau eine Trennfolie, eine Aluminiumfolie und/oder ein, zwei oder mehrere Lagen Abreißgewebe angeordnet.

Die zwischen der Vakuumabdeckung und dem Probenaufbau angeordnete Trennfolie sorgt vorteilhafterweise dafür, dass ein übermäßiger Abfluss des Klebstoffes unterbunden wird. Insbesondere durch das Anordnen einer Aluminiumfolie von mehr als 40 µm bis 50 µm Dicke über der Trennfolie kann eine sehr glatte und gleichmäßige Oberfläche der Klebschicht erzeugt werden. Somit kann eine reproduzierbare Klebschichtdicke gewährleistet werden. Gleichzeitig sorgen die über die Trennfolie aufgebrachten Lagen Abreißgewebe für eine definierte Klebschichtdickenverteilung bzw. Oberflächenstrukturierung.

Die Aufgabe wird im Übrigen auch mit einem Verfahren zur mechanisch-zerstörenden Prüfung einer stoffschlüssigen Fügeverbindung eines Prüfkörpers gelöst, wobei zunächst ein Prüfkörper nach dem vorstehend beschriebenen Verfahren hergestellt wird. Nach dem Aushärten des Klebstoffes wird dann das Prüfgewebe des Prüfkörpers abgezogen, beispielsweise mittels einer mechanischen Vorrichtung, um so die stoffschlüssige Fügeverbindung zwischen dem Substrat und dem Prüfgewebe mechanisch zerstörend zu prüfen.

Die Schälgeschwindigkeit kann 25 bis 1000 mm/min, vorzugsweise 100 bis 500 mm/min betragen. Der Schälwinkel sollte konstant über die Prüflänge sein (bspw. 0° bis 180°).

Die Erfindung wird anhand der beigefügten Figuren beispielhaft näher erläutert. Es zeigen:
- Fig. 1 -: schematische Schnittansicht durch einen Probenaufbau kurz vor der Herstellung des Prüfkörpers;
- Fig. 2 -: perspektivische Darstellung eines Tressengewebes;
- Fig. 3 -: schematische Darstellung der Bildung einzelner Prüfcoupons;
- Fig. 4 -: schematische Darstellung eines möglichen Vakuumaufbaus;
- Fig. 5 -: schematische Darstellung einer Prüfvorrichtung.

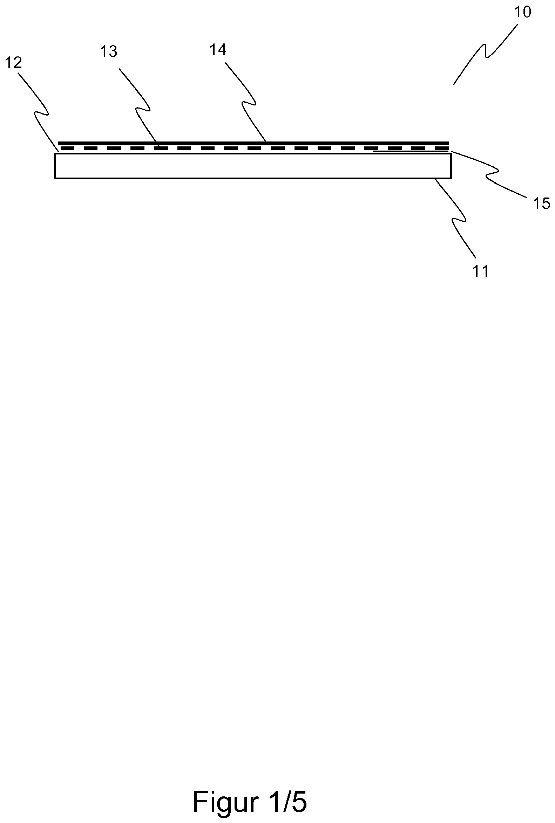

Figur 1 zeigt in einer schematisch stark vereinfachten Darstellung einen Probenaufbau 10, aus dem durch Aushärten eines Klebstoffes der erfindungsgemäße Prüfkörper hergestellt werden soll. Der Probenaufbau weist ein flächiges Faserverbundsubstrat 11 auf, das eine Substratoberfläche 12 hat. Auf diese Substratoberfläche 12 werden nacheinander ein Prüfgewebe 13 sowie ein Klebstoff 14 in Form eines Filmklebstoffes appliziert. Zwischen der Substratoberfläche 12 und dem Prüfgewebe 13 wird darüber hinaus in einem gesonderten Bereich der Substratoberfläche 12 eine Trennfolie 15 appliziert, um hier ein Verkleben des Klebstoffes 14 mit der Substratoberfläche 12 zu vermeiden. In diesen Bereich, wo sich die Trennfolie 15 befindet, wird demzufolge keine stoffschlüssige Fügeverbindung ausgebildet, so dass dieser Bereich in Art einer Abreißlasche oder Abreißhilfe verwendet werden kann.

Das flächige Faserverbundsubstrat 11 kann dabei im bereits ausgehärteten Zustand vorliegen, d. h. das Matrixmaterial wurde in einem vorherigen Schritt bereits vollständig ausgehärtet. In einigen wenigen Anwendungsfällen ist es aber auch denkbar, dass der Klebstoff 14 zusammen mit dem Matrixmaterial des flächigen Faserverbundsubstrates 11 gemeinsam ausgehärtet wird.

Des Weiteren ist es auch denkbar, dass zuerst der Klebstoff 14 und dann das Prüfgewebe 13 auf die Substratoberfläche 12 des flächigen Faserverbundsubstrates 11 appliziert werden. Denkbar ist aber auch, dass zuerst der Klebstoff 14 und das Prüfgewebe 13 in einem separate Prozess verbunden werden, d.h. dass das Prüfgewebe mit Klebstoff getränkt wird, und dass das klebstoffgetränkte Prüfgewebe anschließend auf das flächige Faserverbundsubstrat 11 appliziert wird.

Im Ausführungsbeispiel der Figur 1 wird der so gebildete Probenaufbau 10 zur Herstellung des Prüfkörpers temperiert, wodurch der Klebstoff 14 aufschmilzt, und in das Prüfgewebe 13 eindringt. Durch das Eindringen des aufgeschmolzenen Klebstoffes 14 in das Prüfgewebe 13 wird irgendwann auch die Substratoberfläche 12 durch den Klebstoff 14 benetzt, so dass nach dem Aushärten des Klebstoffes 14 eine stoffschlüssige Fügeverbindung zwischen der Substratoberfläche 12 und dem Klebstoff 14 mit dem darin eingebetteten Prüfgewebe 13 entsteht.

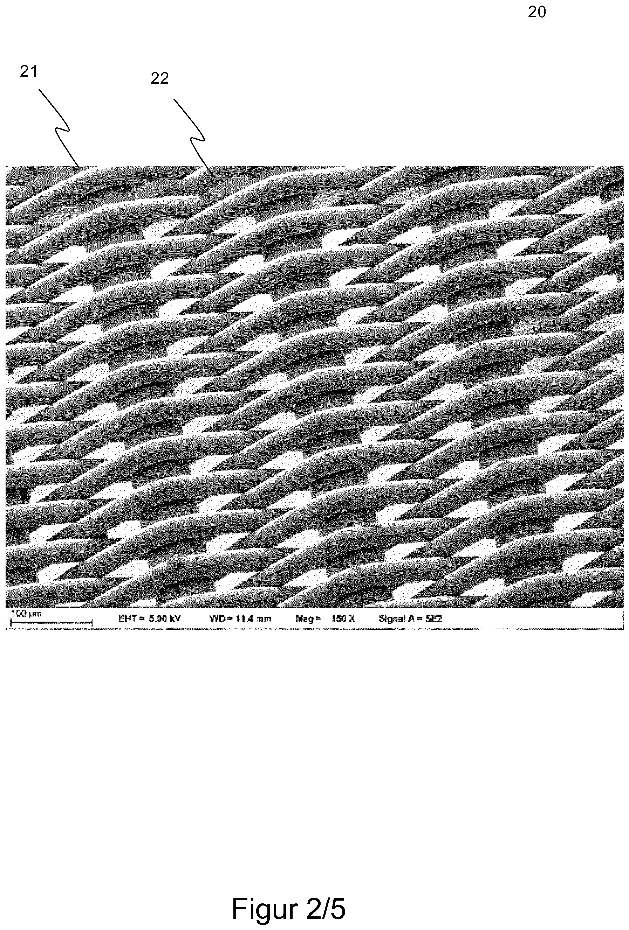

Figur 2 zeigt in einer perspektivischen Darstellung ein Tressengewebe, das aus mehreren Kettfäden 21 sowie einer Mehrzahl von Schussfäden 22 gebildet ist. Die Kettfäden 21 weisen dabei einen größeren Durchmesser bzw. eine größere Querschnittsausdehnung auf als die Schussfäden 22. Ein Schussfaden 22 läuft dabei stets abwechselnd über oder unter dem nächsten Kettfaden 21, wodurch ein geflochtenes Gewebe entsteht.

Wie im Ausführungsbeispiel der Figur 2 zu erkennen ist, ist in einer perspektivischen Projektion auf ein solches Tressengewebe 20 ein Porennetz sichtbar, durch das der Klebstoff zur Herstellung des Prüfkörpers eindringen kann. Da jedoch die Schussfäden 22 immer jeweils auf Block gelegt sind und an den jeweils benachbarten Schussfaden angrenzen, ist in einer Projektion orthogonal zur Ebene des Tressengewebes keine Masche sichtbar (Nullmaschen), was dem Tressengewebe für den vorliegenden Anwendungsfall seine besondere Festigkeit insbesondere im Randbereich verleiht.

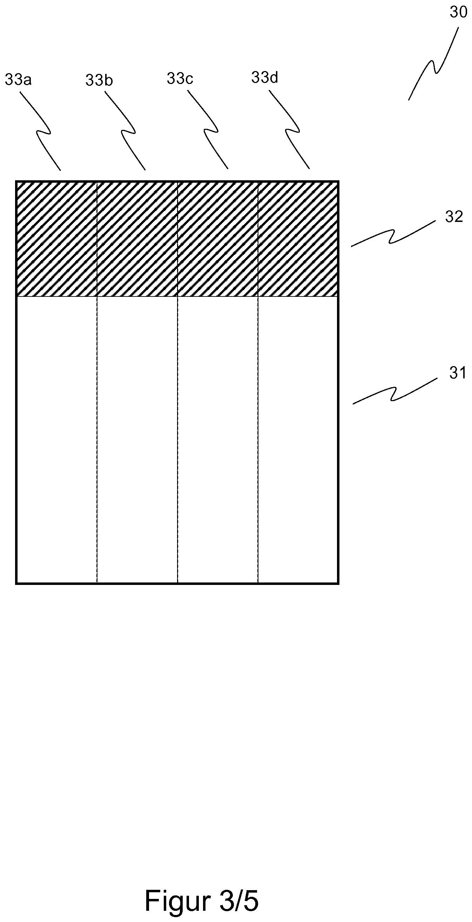

Figur 3 zeigt schematisch den hergestellten Prüfkörper 30, der sich in einen Prüfbereich 31 und in einen Abreißbereich 32 aufteilt. Im Abreißbereich 32 entstand aufgrund der darunter liegenden Trennfolie keine stoffschlüssige Verbindung mit dem flächigen Faserverbundsubstrat, so dass hier das Tressengewebe nicht stoffschlüssig mit dem Substrat verbunden ist. Im Prüfbereich 31 hingegen wurde eine stoffschlüssige Fügeverbindung des Tressengewebes in Verbindung mit dem Klebstoff auf der Substratoberfläche bewirkt.

Der so hergestellte Prüfkörper 30 wird nun in eine Mehrzahl einzelner Prüfcoupons 33 zerteilt, indem entweder das Tressengewebe innerhalb des Prüfbereichs 31 durchtrennt und die Gewebestreifen von dem großen zusammenhängenden Substrat abgezogen werden oder indem das Tressengewebe mitsamt dem Substrat durchtrennt wird, sodass separate Prüfcopons erstellt werden. Ein solches Durchtrennen des Prüfkörpers 30 kann dabei beispielsweise durch Sägen erfolgen, wobei hier vorzugsweise eine Nass-Säge mit Diamanttrennscheibe einzusetzen ist, um eine thermische Beeinflussung der Klebung einerseits und eine hohe Qualität der Sägekante andererseits sicherzustellen.

Aufgrund des verwendeten Tressengewebes als Prüfgewebe muss nach dem Zersägen des Prüfkörpers 30 in die einzelnen Prüfcoupons 33a bis 33d der Randbereich nicht versiegelt werden, da hier kein Einreißen während der Prüfung des Prüfkörpers 30 zu befürchten ist.

Ein wertiger Prüfkörper 30 kann dabei aus einem flächigen Faserverbundsubstrat hergestellt sein, das eine Dicke von 0,1 bis 10 mm aufweisen kann, vorzugsweise 1 mm bei unidirektionalen CFK-Materialien. Der Abreißbereich 32 zur Bildung einer Abzugslasche sollte mindestens 60 mm oder länger sein, vorzugsweise 75 mm. Die verklebte Länge des Prüfbereichs 31 sollte dabei mindestens 50 mm sein, vorzugsweise 200 mm. Die Breite eines Prüfcoupons 33 kann dabei zwischen 10 und 100 mm breit sein, vorzugsweise 25 mm.

Als Webart für das Tressengewebe, beispielsweise glatte Tressen (Leinenbindung), Köpertressen, umgekehrte Tressen, Hochleistungstressen (mit einem erhöhten Durchflussvermögen), Tressen in Duplex- und Triplex-Ausführung. Die Gewebedicke kann dabei 0,05 bis 0,5 mm, vorzugsweise ca. 0,10 bis 0,15 mm betragen. Die Porosität kann zwischen 30 und 65 % liegen, vorzugsweise mehr als 50 %, wobei Hochleistungstressen mit erhöhtem Durchflussvermögen zu bevorzugen sind. Als Gewebematerial kommen beispielsweise rostfreier Stahl, aber auch thermoplastische Filamente in Betracht.

Die Oberfläche des Tressengewebes kann eine Chromoxidschicht aufweisen. Die Oberfläche kann dabei geätzt sein, um eine erhöhte Oberflächenrauigkeit für gute Anhaftung des Klebstoffes zu erzielen. Denkbar ist aber auch, dass die Oberfläche geätzt und beschichtet ist, z. B. mit Hilfe eines Haftvermittlers.

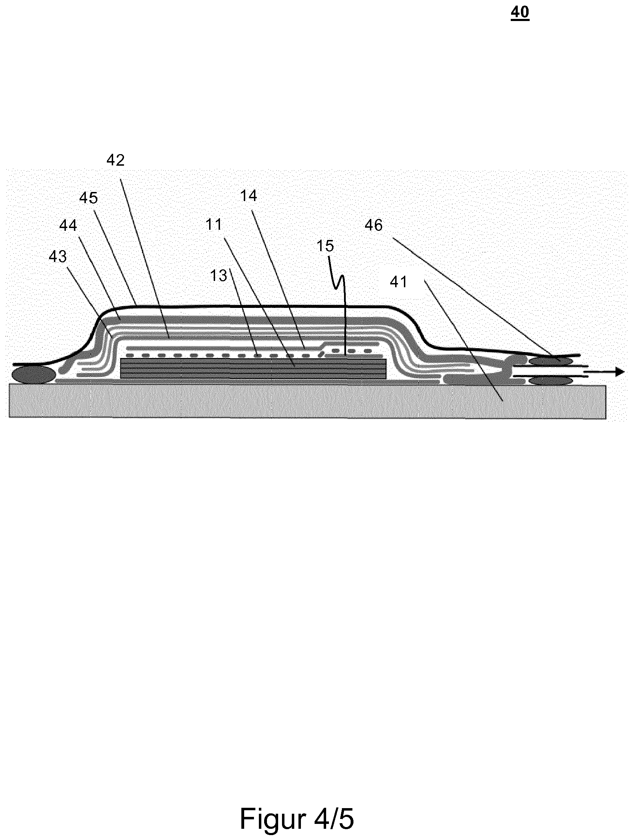

Figur 4 zeigt schematisch den Vakuumaufbau 40 zur Herstellung eines Prüfkörpers. Auf ein Formwerkzeug 41 wird dabei zunächst der aus Figur 1 bekannte Probenaufbau 10 erstellt mit dem Substrat 11, der Trennfolie 15, dem Tressengewebe 13 sowie dem Klebstoff 14.

Der so gebildete Probenaufbau 10 wird dann mittels einer Trennfolie 42 abgedeckt. Auf diese Trennfolie wird dann ein Abreißgewebe 43 appliziert, auf das dann ein Saugvlies 44 gelegt wird. Anschließend wird das Ganze mit einer Vakuumfolie 45 abgedeckt und an den Rändern mit Hilfe eines Dichtbandes 46 vakuumdicht verschlossen. Optional kann zwischen Trennfolie und Abreißgewebe auch eine dicke Aluminiumfolie (bspw. größer als 40 µm bis 50 µm) gelegt werden, um eine besonders glatte Klebstoffoberfläche zu erzeugen.

Optional kann ein Entlüftungsgewebe 47 vorgesehen sein, das im Bereich des Tressengewebes 13 innerhalb des Probenaufbaus 10 angeordnet ist, um so ein Entlüften des Tressengewebes vor der Infusion durch den Klebstoff zu erlauben.

Ein besonderes Merkmal dieses Vakuumaufbaus 40 ist, dass durch die auf dem Klebstoff 14 aufliegenden Trennfolie 42 ein übermäßiger Fluss von Klebstoff unterbunden wird. Somit kann eine reproduzierbare Klebschichtdicke gewährleistet werden. Gleichzeitig sorgen die über die Trennfolie 42 aufgebrachten zwei Lagen Abreißgewebe 43 für eine definierte Klebschichtdickenverteilung bzw. Oberflächenstrukturierung.

Dieser so hergestellte Vakuumaufbau 40 wird dann über eine Vakuumpumpe evakuiert, wobei der Klebstoff dann unter Temperierung und Druckbeaufschlagung ausgehärtet wird. Hierfür ist beispielsweise denkbar, dass nach dem Evakuieren des Vakuumaufbaus 40 dieser in einem Autoklaven eingebracht wird, um den Vakuumaufbau 40 zu temperieren und mit einem Druck zu beaufschlagen.

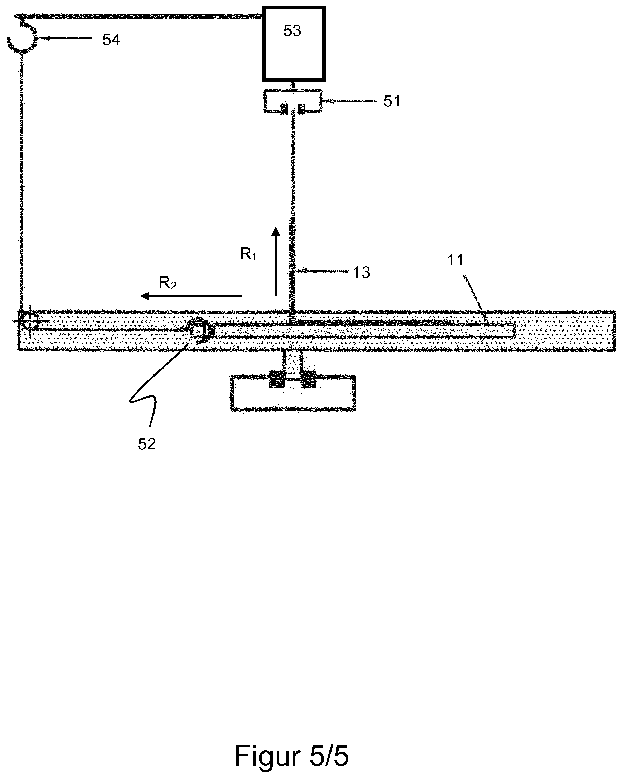

Figur 5 zeigt schematisch eine Vorrichtung 50 nach DIN-EN 1939:2003. In die Vorrichtung 50 wird zunächst ein ausgehärteter Prüfkörper 30 eingesetzt, wobei das Prüfgewebe/Tressengewebe 13 an einer ersten Befestigungsvorrichtung 51 und das Substrat 11 an einer zweiten Befestigungsvorrichtung 52 befestigt wird. Die erste Befestigungsvorrichtung 51 ist dabei mit einer Sensorvorrichtung 53 verbunden, um die beim Abreißen des Prüfgewebes 13 entstehenden Parameter erfassen zu können.

Die Prüfvorrichtung 50 ist so ausgebildet, dass sie das Prüfgewebe 13 in Richtung R₁ orthogonal zum Substrat 11 abzieht. Über einen Befestigungspunkt 54 ist die zweite Befestigungsvorrichtung 52 mit der Bewegung in Richtung R₁ gekoppelt, so dass Abziehen des Prüfgewebes 13 in Richtung R₁ das Substrat 11 eine Bewegung in Richtung R₂, die parallel zu der Ebene des Substrats 11 liegt, ausführt. Hierdurch kann der Schälwinkel über den gesamten Abreißvorgang konstant gehalten werden.

Es hat sich gezeigt, dass Schälgeschwindigkeiten von 25 bis 1000 mm pro Minute, vorzugsweise 100 bis 250 mm pro Minute, denkbar sind. Der Schälwinkel kann zwischen 90 und 180 Grad vorgesehen sein und sollte über die gesamte Prüflänge konstant sein. Die Prüftemperatur kann gemäß einer entsprechenden Vorgabe um die Raumtemperatur schwanken. Die Probe kann vorher konditioniert sein, d. h. sie kann trocken oder feucht gesättigt sein. Darüber hinaus ist denkbar, dass der Prüfkörper vorgespannt wird und somit beispielsweise einen vorgegebenen Biegeradius erhält.

Die Auswertung des Schäldiagramms erfolgt weitestgehend in Anlehnung an die DIN-EN2243-2 bzw. Verfahren unter Normen. So können 175 mm der Probe geschält und die ersten 15 mm Schälweg nach Erreichen des Anfangspeaks werden noch nicht ausgewertet. Die darauffolgenden mm Schälweg werden dann ausgewertet. Die verbleibenden 10 mm Schälweg werden nicht ausgewertet. Das Bruchbild wird innerhalb des Auswertebereichs bewertet. Es können aber auch 180 mm der Probe geschält werden, wobei die ersten 20 mm Schälweg nach Erreichen der ersten Kraftspitzen nicht ausgewertet werden. Die darauffolgenden 150 mm Schälweg werden für die Auswertung herangezogen, während die verbleibenden 10 mm Schälweg nicht mehr ausgewertet werden.

Demzufolge ist es von der vorliegenden Erfindung mit umfasst, dass ein Prüfkörper hergestellt nach dem vorliegend beschriebenen Verfahren zur mechanisch zerstörenden Prüfung mit Hilfe einer derartigen Prüfvorrichtung verwendet wird.

Vorteilhafterweise kann eine Rollen-Schälvorrichtung bspw. nach DIN EN 2243-2 oder eine ähnliche Konstruktion (z.B. nach ASTM D3167) zur Prüfung der Testcoupons verwendet werden.

### Bezugszeichenliste

10 Probenaufbau
11 flächiges Faserverbundsubstrat
12 Substratoberfläche
13 Prüfgewebe
14 Klebstoff
15 Trennfolie
20 Tressengewebe
21 Kettfäden
22 Schussfäden
30 Prüfkörper
31 Prüfbereich
32 Abreißbereich
33 Prüfcoupon
40 Vakuumaufbau
41 Formwerkzeug
42 Trennfolie
43 Abreißgewebe
44 Saugvlies
45 Vakuumfolie
46 Dichtband
47 Entlüftungsgewebe
50 Prüfvorrichtung
51 erste Befestigungsvorrichtung
52 zweite Befestigungsvorrichtung
53 Sensorvorrichtung
54 Befestigungspunkt
R₁ Schälrichtung
R₂ Ausgleichsbewegung

## Patentansprüche

1. Verfahren zur Herstellung eines Prüfkörpers (30) für eine mechanisch-zerstörende Prüfung einer stoffschlüssigen Fügeverbindung, wobei das Verfahren die folgenden Schritte umfasst:
- Bereitstellen eines flächigen Substrates (11),
- Applizieren mindestens eines Prüfgewebes (13) und eines Klebstoffes (14) auf eine Substratoberfläche (12) des flächigen Substrates (11), und
- Aushärten des Klebstoffes (14), so dass eine stoffschlüssige Fügeverbindung zwischen dem Prüfgewebe (13) und der Substratoberfläche (12) durch den ausgehärteten Klebstoff (14) entsteht,
**dadurch gekennzeichnet, dass** als Prüfgewebe (13) ein Tressengewebe (20) und/oder ein kalandriertes Quadratmaschengewebe bereitgestellt wird.

2. Verfahren nach Anspruch 1, **dadurch gekennzeichnet, dass** als flächiges Substrat (11) ein Faserverbundsubstrat bereitgestellt wird, das aus einem Faserverbundwerkstoff aufweisend ein Fasermaterial und ein das Fasermaterial einbettendes Matrixmaterial gebildet ist.

3. Verfahren nach Anspruch 1 oder 2, **dadurch gekennzeichnet, dass** das Tressengewebe (20) und/oder das Quadratmaschengewebe eine Mehrzahl von Kettfäden (21) und eine Mehrzahl von die Kettfäden (21) kreuzende Schussfäden (22) aufweist.

4. Verfahren nach Anspruch 3, **dadurch gekennzeichnet, dass** die Kettfäden (21) und/oder die Schussfäden (22) aus einem metallischen Material, insbesondere aus einem Eisenmaterial, gebildet sind.

5. Verfahren nach Anspruch 3 oder 4, **dadurch gekennzeichnet, dass** die Schussfäden (22) einen kleineren Querschnitt aufweisen als die Kettfäden (21).

6. Verfahren nach einem der Ansprüche 3 bis 5, **dadurch gekennzeichnet, dass** das Tressengewebe (20) derart gewebt ist, dass die Kettfäden (21) voneinander beabstandet angeordnet sind, während die Schussfäden (22) aneinander angrenzend angeordnet sind.

7. Verfahren nach einem der vorhergehenden Ansprüche, **dadurch gekennzeichnet, dass** das Tressengewebe (20) derart bereitgestellt wird, dass in der Projektion auf das Tressengewebe (20) keine Maschen sichtbar sind.

8. Verfahren nach einem der vorhergehenden Ansprüche, **dadurch gekennzeichnet, dass** in einem ersten Schritt das Prüfgewebe (13) auf das flächige Substrat (11) appliziert wird und in einem zweiten Schritt dann auf das applizierte Prüfgewebe (13) der Klebstoff (14) aufgetragen wird.

9. Verfahren nach einem der vorhergehenden Ansprüche, **dadurch gekennzeichnet, dass** der Klebstoff (14) als Filmklebstoff bereitgestellt und aufgetragen wird.

10. Verfahren nach einem der vorhergehenden Ansprüche, **dadurch gekennzeichnet, dass** der Klebstoff (14) auf das Prüfgewebe (13) aufgetragen wird, bevor das Prüfgewebe (13) auf dem flächigen Substrat (11) appliziert wird.

11. Verfahren nach einem der vorhergehenden Ansprüche, **dadurch gekennzeichnet, dass** in einem Bereich des flächigen Substrates (11) zunächst eine Trennfolie (15) appliziert wird, um in diesem Bereich eine stoffschlüssige Fügeverbindung mit dem Substrat zu verhindern.

12. Verfahren nach einem der vorhergehenden Ansprüche, **dadurch gekennzeichnet, dass** nach dem Aushärten des Klebstoffes (14) der Prüfkörper (30) in eine Mehrzahl von einzelnen Prüfcoupons (33) zerteilt wird, indem das Prüfgewebe (13) durchtrennt wird.

13. Verfahren nach Anspruch 12, **dadurch gekennzeichnet, dass** der Prüfkörper derart zerteilt wird, dass das Prüfgewebe (13) gemeinsam mit dem Substrat (11) durchtrennt wird.

14. Verfahren nach einem der vorhergehenden Ansprüche, **dadurch gekennzeichnet, dass** an dem Prüfgewebe (13) keine Randversiegelung aufgebracht wird.

15. Verfahren nach einem der vorhergehenden Ansprüche, **dadurch gekennzeichnet, dass** nach dem Applizieren des Prüfgewebes (13) und des Klebstoffes (14) auf das flächige Substrat (11) dieser Probenaufbau (10) durch eine Vakuumabdeckung abgedeckt, evakuiert und anschließend der Klebstoff (14) ausgehärtet wird.

16. Verfahren nach Anspruch 15, **dadurch gekennzeichnet, dass** zwischen der Vakuumabdeckung und dem Probenaufbau (10) eine Trennfolie (42), eine Aluminiumfolie und/oder eine, zwei oder mehrere Lagen Abreißgewebe (43) angeordnet werden.

17. Verfahren nach einem der vorhergehenden Ansprüche, **dadurch gekennzeichnet, dass** der Klebstoff (14) durch Temperieren ausgehärtet wird.

18. Verfahren zur mechanisch-zerstörenden Prüfung einer stoffschlüssigen Fügeverbindung eines Prüfkörpers, wobei das Verfahren die folgenden Schritte umfasst:
- Herstellen eines Prüfkörpers mittels eines Verfahrens nach einem der vorhergehenden Ansprüche
- Prüfen der stoffschlüssigen Fügeverbindung des Prüfkörpers durch Abziehen des Prüfgewebes.

## Claims

1. Method for producing a test body (30) for mechanically destructively testing a materially bonded joining connection, wherein the method comprises the following steps:
- providing an areal substrate (11),
- applying at least one test fabric (13) and an adhesive (14) to a substrate surface (12) of the areal substrate (11), and
- curing the adhesive (14), and therefore a materially bonded joining connection is produced between the test fabric (13) and the substrate surface (12) by way of the cured adhesive (14),
**characterized in that** a Dutch-weave fabric (20) and/or a calendered square-mesh fabric is provided as the test fabric (13).

2. Method according to Claim 1, **characterized in that** provided as the areal substrate (11) is a fibre composite substrate formed from a fibre composite material which has a fibre material and a matrix material in which the fibre material is embedded.

3. Method according to Claim 1 or 2, **characterized in that** the Dutch-weave fabric (20) and/or the square-mesh fabric has a plurality of warp threads (21) and a plurality of weft threads (22) which cross the warp threads (21).

4. Method according to Claim 3, **characterized in that** the warp threads (21) and/or the weft threads (22) are formed from a metallic material, in particular from a ferrous material.

5. Method according to Claim 3 or 4, **characterized in that** the weft threads (22) have a smaller cross section than the warp threads (21).

6. Method according to one of Claims 3 to 5, **characterized in that** the Dutch-weave fabric (20) is woven in such a way that the warp threads (21) are spaced apart from one another, while the weft threads (22) are arranged adjoining one another.

7. Method according to one of the preceding claims, **characterized in that** the Dutch-weave fabric (20) is provided in such a way that no meshes are visible in the projection on the Dutch-weave fabric (20).

8. Method according to one of the preceding claims, **characterized in that**, in a first step, the test fabric (13) is applied to the areal substrate (11) and, in a second step, the adhesive (14) is then deposited onto the applied test fabric (13).

9. Method according to one of the preceding claims, **characterized in that** the adhesive (14) is provided and deposited as a film adhesive.

10. Method according to one of the preceding claims, **characterized in that** the adhesive (14) is deposited onto the test fabric (13) before the test fabric (13) is applied to the areal substrate (11).

11. Method according to one of the preceding claims, **characterized in that** firstly a separating film (15) is applied in a region of the areal substrate (11), in order to prevent a materially bonded joining connection with the substrate in this region.

12. Method according to one of the preceding claims, **characterized in that**, after the adhesive (14) has cured, the test body (30) is divided into a plurality of individual test coupons (33) by severing the test fabric (13).

13. Method according to Claim 12, **characterized in that** the test body is divided in such a way that the test fabric (13) is severed together with the substrate (11) .

14. Method according to one of the preceding claims, **characterized in that** no edge sealing is applied to the test fabric (13).

15. Method according to one of the preceding claims, **characterized in that**, after applying the test fabric (13) and the adhesive (14) to the areal substrate (11), this test construction (10) is covered by a vacuum covering, evacuated and then the adhesive (14) is cured.

16. Method according to Claim 15, **characterized in that** a separating film (42), an aluminium film and/or one, two or more layers of tear-off fabric (43) are arranged between the vacuum covering and the test construction (10).

17. Method according to one of the preceding claims, **characterized in that** the adhesive (14) is cured by controlling the temperature.

18. Method for mechanically destructively testing a materially bonded joining connection of a test body, wherein the method comprises the following steps:
- producing a test body by means of a method according to one of the preceding claims;
- testing the materially bonded joining connection of the test body by pulling off the test fabric.

## Revendications

1. Procédé de production d'un corps d'essai (30) pour un essai mécanique destructif d'une liaison d'assemblage par coopération de matière, le procédé comprenant les étapes suivantes consistant à :
- fournir un substrat plat (11),
- appliquer au moins un tissu d'essai (13) et une colle (14) sur une surface de substrat (12) du substrat plat (11), et
- durcir la colle (14), de sorte qu'il se forme une liaison d'assemblage par coopération de matière entre le tissu d'essai (13) et la surface de substrat (12) par la colle durcie (14),
**caractérisé en ce qu'**un tissu tressé (20) et/ou un tissu calandré à mailles carrées est fourni comme tissu d'essai (13).

2. Procédé selon la revendication 1,
**caractérisé en ce qu'**un substrat composite à fibres est fourni comme substrat plat (11), qui est formé d'un matériau composite à fibres présentant un matériau fibreux et un matériau matriciel incorporant le matériau fibreux.

3. Procédé selon la revendication 1 ou 2,
**caractérisé en ce que** le tissu tressé (20) et/ou le tissu à mailles carrées présente une pluralité de fils de chaîne (21) et une pluralité de fils de trame (22) croisant les fils de chaîne (21).

4. Procédé selon la revendication 3,
**caractérisé en ce que** les fils de chaîne (21) et/ou les fils de trame (22) sont formés d'un matériau métallique, en particulier d'un matériau ferreux.

5. Procédé selon la revendication 3 ou 4,
**caractérisé en ce que** les fils de trame (22) présentent une section transversale plus petite que celle des fils de chaîne (21).

6. Procédé selon l'une des revendications 3 à 5,
**caractérisé en ce que** le tissu tressé (20) est tissé de telle sorte que les fils de chaîne (21) sont espacés les uns des autres, tandis que les fils de trame (22) sont disposés de manière adjacente les uns aux autres.

7. Procédé selon l'une des revendications précédentes,
**caractérisé en ce que** le tissu tressé (20) est fourni de telle sorte qu'aucune maille n'est visible dans la projection sur le tissu tressé (20).

8. Procédé selon l'une des revendications précédentes,
**caractérisé en ce que**, dans une première étape, le tissu d'essai (13) est appliqué sur le substrat plat (11) et, dans une deuxième étape, la colle (14) est étalée sur le tissu d'essai (13) appliqué.

9. Procédé selon l'une des revendications précédentes,
**caractérisé en ce que** la colle (14) est fournie et étalée sous forme de colle en film.

10. Procédé selon l'une des revendications précédentes,
**caractérisé en ce que** la colle (14) est étalée sur le tissu d'essai (13) avant que le tissu d'essai (13) ne soit appliqué sur le substrat plat (11).

11. Procédé selon l'une des revendications précédentes,
**caractérisé en ce que**, dans une zone du substrat plat (11), tout d'abord un film de séparation (15) est appliqué afin d'empêcher dans cette zone une liaison d'assemblage par coopération de matière avec le substrat.

12. Procédé selon l'une des revendications précédentes,
**caractérisé en ce qu'**après le durcissement de la colle (14), le corps d'essai (30) est divisé en une pluralité de coupons d'essai individuels (33) par coupure du tissu d'essai (13).

13. Procédé selon la revendication 12,
**caractérisé en ce que** le corps d'essai est divisé de telle sorte que le tissu d'essai (13) est coupé en même temps que le substrat (11).

14. Procédé selon l'une des revendications précédentes,
**caractérisé en ce qu'**aucun scellement des bords n'est appliqué sur le tissu d'essai (13).

15. Procédé selon l'une des revendications précédentes,
**caractérisé en ce qu'**après l'application du tissu d'essai (13) et de la colle (14) sur le substrat plat (11), cette structure formant échantillon (10) est recouverte d'une couverture sous vide, mise sous vide, et la colle (14) est ensuite durcie.

16. Procédé selon la revendication 15,
**caractérisé en ce qu'**une feuille de séparation (42), une feuille d'aluminium et/ou une, deux ou plusieurs couches de tissu d'arrachage (43) sont disposées entre la couverture sous vide et la structure formant échantillon (10).

17. Procédé selon l'une des revendications précédentes,
**caractérisé en ce que** la colle (14) est durcie par thermorégulation.

18. Procédé d'essai mécanique destructif d'une liaison d'assemblage par coopération de matière d'un corps d'essai, le procédé comprenant les étapes suivantes consistant à :
- produire un corps d'essai par un procédé selon l'une des revendications précédentes ;
- contrôler la liaison d'assemblage par coopération de matière du corps d'essai en retirant le tissu d'essai.
